# EUROPÄISCHE PATENTSCHRIFT

(11) **EP 4 202 273 B1**
(45) Veröffentlichungstag und Bekanntmachung des Hinweises auf die Patenterteilung: **23.10.2024**
(21) Anmeldenummer: 21217232.4
(22) Anmeldetag: 23.12.2021
(51) Int. Cl.: F16K 31/06, F16K 31/10

(54) **FLUIDVENTIL**
FLUID VALVE
SOUPAPE À FLUIDE

(43) Veröffentlichungstag der Anmeldung: 28.06.2023
(73) Patentinhaber: AVS, Ingenieur J.C. Römer GmbH, 94481 Grafenau (DE)
(72) Erfinder: Fisch, Rainer, 94051 Hauzenberg (DE)
(74) Vertreter: Wolf, Gerhard

(56) Entgegenhaltungen:
- WO-A1-2007/124826
- DE-A1- 102013 220 557
- NL-C- 135 637

## Beschreibung

Die Erfindung betrifft ein Fluidventil mit einer magnetischen Antriebseinheit, mittels der ein Ventilschließköper bewegbar ist.

Fluidventile mit einem magnetischen Antrieb sind bereits bekannt. Insbesondere sind Fluidventile bekannt, bei denen ein Anker durch das Applizieren eines Magnetfeldes linear bewegt, d.h. verschoben, wird. Diese Linearbewegung wird in eine Schwenkbewegung eines Ventilschließkörpers umgesetzt. Abhängig von der Schwenkbewegung des Ventilschließkörpers wird ein Freigeben bzw. Verschließen eines Fluidkanals im Fluidventil bewirkt.

Die Druckschrift NL 135 637 C offenbart ein elektromagnetisch betätigbares Ventil.

Die Druckschrift WO 2007/124826 A1 offenbart ein Ventil mit elektromagnetischem Antrieb.

Ein wesentlicher Nachteil bekannter Fluidventile besteht darin, dass die durch das magnetische Feld einer Spule bewirkte Krafteinleitung in den Anker konstruktionsbedingt gering ist, so dass relativ große Ströme durch die Spule nötig sind, um das Fluidventil umschalten zu können.

Ausgehend hiervon ist es Aufgabe der Erfindung, ein Fluidventil anzugeben, das ein verbessertes Schaltverhalten bei reduzierten Schaltströmen ermöglicht.

Die Aufgabe wird durch ein Fluidventil mit den Merkmalen des unabhängigen Patentanspruchs 1 gelöst. Bevorzugte Ausführungsformen sind Gegenstand der Unteransprüche.

Gemäß einem Aspekt wird ein Fluidventil umfassend eine magnetische Antriebseinheit für einen Ventilschließkörper offenbart. Die Antriebseinheit umfasst einen Kern, eine abschnittsweise den Kern umgebende Spule und einen durch die Bestromung der Spule und die daraus resultierende Magnetkraft um eine Schwenkachse verschwenkbaren Anker. Der Ventilschließkörper steht mit dem Anker in Wirkverbindung und ist durch die Verschwenkung des Ankers um eine Schwenkachse verschwenkbar. Der Ventilschließkörper lässt sich dadurch zumindest in eine erste und eine zweite Schwenkstellung positionieren. Der Ventilschießkörper weist einen ersten und einen zweiten Schenkel auf, wobei der erste Schenkel in ein zumindest einen Fluidkanal aufweisendes Ventilgehäuse hineinreicht und wobei der zweite Schenkel winklig vom ersten Schenkel absteht und die Wirkverbindung mit dem Anker herstellt.

Der technische Vorteil des Fluidventils besteht darin, dass durch die Verschwenkbarkeit des Ankers und des damit verbundenen Ventilschließkörpers ein verbessertes Schaltverhalten des Fluidventils erreicht wird, da im Vergleich zur linearen Verschiebung des Ankers geringere Schaltströme nötig sind. Durch die winklige Ausbildung des Ventilschließkörpers lässt sich eine raumsparende Kopplung des Ventilschließkörpers mit dem Anker bei gleichzeitig hoher Krafteinleitung erzielen.

Erfindungsgemäß ist der erste Schenkel länger ausgebildet ist als der zweite Schenkel. Dadurch wird erreicht, dass der Hub bzw. Schwenkweg des ersten Schenkels größer ist als der Hub bzw. Schwenkweg des zweiten Schenkels. Dadurch kann trotz eines geringen Schwenkwinkels bzw. Hubs des Ankers ein vergrößerter Hub bzw. Schwenkweg des freien Endes des ersten Schenkels und damit ein verbessertes Schaltverhalten des Fluidventils erreicht werden.

Gemäß einem Ausführungsbeispiel ist der erste Schenkel zumindest um den Faktor 1,5 länger ausgebildet ist als der zweite Schenkel.

Insbesondere liegt das Längenverhältnis zwischen dem ersten und zweiten Schenkel zwischen 1,5 und 2. Durch diese Dimensionierung des Längenverhältnisses kann ein hinreichend gutes Schaltverhalten bei gleichzeitig kompakter Bauweise und hoher Schließkraft des Ventilschließkörpers erreicht werden.

Erfindungsgemäß erstreckt sich der zweite Schenkel über eine Teillänge des Ankers entlang dessen Längsachse. Dadurch kann die Schwenkachse des Ventilschließkörpers in einem Mittenbereich des Ankers liegen und der zweite Schenkel ermöglicht eine Kopplung des Ventilschließkörpers mit einem freien Ende des Ankers.

Gemäß einem Ausführungsbeispiel erstreckt sich der zweite Schenkel von der Schwenkachse des Ventilschließkörpers aus in Richtung der Seite des Ankers, die der Schwenkachse des Ankers abgewandt ist. Dadurch kann der Ventilschließkörper mit dem Ankerbereich gekoppelt werden, der bei Verschwenkung des Ankers den größten Hub vollzieht.

Gemäß einem Ausführungsbeispiel steht der erste Schenkel rechtwinklig oder im Wesentlichen rechtwinklig vom zweiten Schenkel ab. Dadurch lässt sich eine Umsetzung der Schwenkbewegung des Ankers, der oberhalb des Ventilgehäuses vorgesehen ist, in eine senkrecht oder im Wesentlichen senkrecht dazu orientierte Schwenkbewegung des ersten Schenkels des Ventilschließkörpers erreichen.

Gemäß einem Ausführungsbeispiel ist die Schwenkachse des Ventilschließkörpers im Übergangsbereich zwischen dem ersten und zweiten Schenkel angeordnet. Dadurch lässt sich eine vorteilhafte Umsetzung der Schwenkbewegung des Ankers in eine Schwenkbewegung des Ventilschließkörpers erreichen.

Gemäß einem Ausführungsbeispiel ist der Anker durch die Antriebseinheit zwischen einer ersten und einer zweiten Schwenkstellung bewegbar, wobei der Winkel zwischen der ersten und zweiten Schwenkstellung 5° oder kleiner ist. Durch diesen geringen Winkelhub des Ankers lässt sich eine hohe Krafteinleitung in den Anker auch dann erreichen, wenn dieser von den Polflächen des Kerns weggeschwenkt ist. Dadurch sind die zum Umschalten des Fluidventils nötigen Ströme durch die Spule niedrig, da auch in dem Zustand, in dem der Anker von dem Kern weggeschwenkt ist, aufgrund des geringen Abstands zwischen Anker und den Polflächen des Kerns eine hohe Krafteinleitung erfolgt.

Gemäß einem Ausführungsbeispiel ist der Kern U-förmig ausgebildet und weist ein Paar von Polflächen auf. Der Anker ist dabei derart ausgebildet, dass dieser das Paar von Polflächen überspannt. Vorzugsweise wird durch das Verschwenken des Ankers im bestromten Zustand der Spule der magnetische Kreis zwischen den Polflächen geschlossen. Durch das Erstrecken des Ankers über die Polflächen wird eine hohe Kraft auf den Anker appliziert, die zur Verschwenkung des Ventilschließkörpers genutzt wird.

Gemäß einem Ausführungsbeispiel verläuft die Schwenkachse des Ankers parallel zu einer Ebene, in der die Polflächen des Kerns angeordnet sind. Die Schwenkachse des Ankers liegt in Richtung der Längsachse des Ankers gesehen vorzugsweise unterhalb des Paars von Polflächen, die in Richtung der Längsachse des Ankers gesehen übereinander angeordnet sind. Dadurch lässt sich der Anker relativ zu der Ebene der Polflächen verschwenken und dabei der magnetische Kreis bei Bestromung der Spule schließen.

Gemäß einem Ausführungsbeispiel ist der Anker relativ zu einer Ebene, in der die Polflächen des Kerns angeordnet sind, verschwenkbar, und zwar derart, dass der Anker im bestromten Zustand in eine erste Schwenkstellung zu den Polflächen hin geschwenkt und im stromlosen Zustand in eine zweite Schwenkstellung positioniert wird, in der die Längsachse des Ankers von der Ebene der Polflächen schräg absteht. Das Herausschwenken aus der Ebene erfolgt vorzugsweise mittels der Federkraft einer Feder, die bei Strom-Beaufschlagung der Spule verformt wird. In der ersten Schwenkstellung ist der Anker vorzugsweise mit geringem Abstand, beispielsweise kleiner als 1mm, insbesondere kleiner als 0,5mm von den Polflächen entfernt, d.h. es erfolgt keine direkte Anlage an die Polflächen. In der ersten Schwenkstellung ist der magnetische Kreis geschlossen. In der zweiten Schwenkstellung beträgt der Abstand des Ankers von den Polflächen (insbesondere zu der am weitesten entfernten Polfläche) maximal 5mm, insbesondere 4mm, 3mm oder 2mm, besonders bevorzugt 1mm oder weniger, beispielsweise 0,8mm oder im Wesentlichen 0,8mm. Aufgrund des geringen Hubs der Schwenkbewegung wird eine hohe Krafteinleitung in den Anker und damit eine hohe Stellkraft erzeugt.

Gemäß einem Ausführungsbeispiel ist die Schwenkachse des Ankers an einem ersten freien Ende des Ankers vorgesehen und das freie Ende des zweiten Schenkels des Ventilschließkörpers ist mit einem zweiten freien Ende des Ankers verbunden, das der Schwenkachse des Ankers gegenüberliegt. Dadurch wird eine verbesserte mechanische Kopplung zwischen dem Anker und dem Ventilschließkörper erreicht, da der Ankerbereich mit dem Ventilschließkörper gekoppelt wird, der den größten Hub bzw. Verschwenkweg vollzieht.

Gemäß einem Ausführungsbeispiel weist der Anker im Bereich des zweiten freien Endes eine Anlenkstelle für den Ventilschließkörper auf. Die Anlenkstelle ist an einem Vorsprung des Ankers vorgesehen, der an einer dem Kern abgewandten Rückseite des Ankers absteht. Dadurch steht die Anlenkstelle in Richtung eines Ventilgehäuses von dem Anker ab, in den zumindest ein Abschnitt des Ventilschließkörpers hineinragt. Somit lässt sich eine raumsparende Kopplung des Ankers mit dem Ventilschließkörper erreichen.

Gemäß einem Ausführungsbeispiel bildet die Anlenkstelle eine Aufnahme für ein freies Ende des Ventilschließkörpers, wobei das freie Ende des Ventilschließkörpers verschwenkbar in der Anlenkstelle gehalten ist. Die Anlenkstelle ist dabei derart ausgebildet, dass der Ventilschließkörper in Wirkverbindung mit dem Anker steht und damit ein Verschwenken des Ankers zu einem Verschwenken des Ventilschließkörpers führt, der Ventilschließkörper aber auch selbst relativ zum Anker verschwenkbar ist. Die Anlenkstelle kann beispielsweise im Querschnitt hakenförmig ausgebildet sein und mit einem freien Ende des Ventilschließkörpers eine Drehgelenkstelle ausbilden. Dadurch kann eine Kraftübertragung vom Anker auf den Ventilschließkörper bei gleichzeitiger Verschwenkbarkeit des Ankers relativ zum Ventilschließkörper erreicht werden.

Gemäß einem Ausführungsbeispiel ist die Verschwenkbarkeit des Ankers sowohl im bestromten als auch im unbestromten Zustand der magnetischen Antriebseinheit durch den Schwenkbereich des Ventilschließkörpers in dem Ventilgehäuse begrenzt. In anderen Worten wird die Schwenkbewegung des Ankers nicht dadurch begrenzt, dass dieser gegenüber umgebenden Bauteilen des Fluidventils anschlägt, sondern der Anker wird indirekt über den Ventilschließkörper in seiner Verschwenkbarkeit begrenzt. Dadurch ist es nicht nötig, eine Justierung des Verschwenkweges des Ankers vorzunehmen, wodurch die Herstellungskosten des Fluidventils verringert werden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand mehrerer Figuren an Ausführungsbeispielen näher erläutert. Es zeigen:
- Fig. 1: beispielhaft einen Längsschnitt durch ein Fluidventil, das einen ersten Schaltzustand aufweist;
- Fig. 2: beispielhaft einen Längsschnitt durch ein Fluidventil, das einen zweiten Schaltzustand aufweist;
- Fig. 3: beispielhaft einen Ventilschließkörper in einer Seitendarstellung;
- Fig. 4: beispielhaft einen Ventilschließkörper in einer perspektivischen Darstellung; und
- Fig. 5: beispielhaft einen Ventilschließkörper in einer Draufsichtdarstellung.

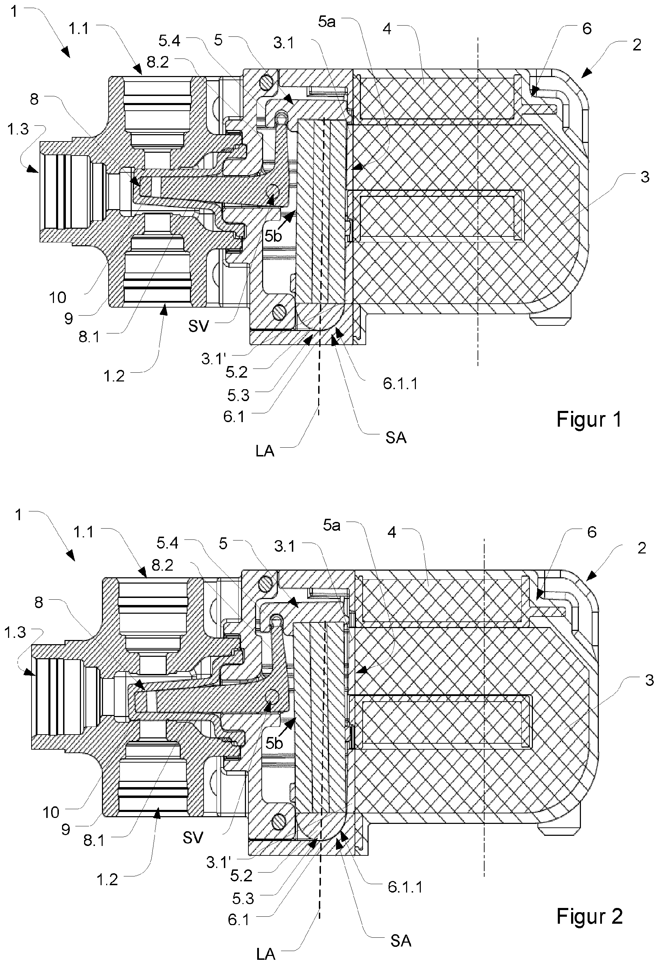

Figuren 1 und 2 zeigen beispielhaft und schematisch Längsschnittdarstellungen mittig durch ein Fluidventil 1, wobei sich die Figuren lediglich durch die Schaltstellung des Fluidventils 1 unterscheiden.

Das Fluidventil 1 umfasst eine Antriebseinheit 2 für einen Ventilschließkörper 8 und ein Ventilgehäuse 9, in dem zumindest ein Fluidkanal vorgesehen ist. Der Ventilschließkörper 8 reicht in das Ventilgehäuse 9 hinein und ist mit der Antriebseinheit 2 derart gekoppelt, dass der Ventilschließkörper 8 durch die Antriebseinheit 2 bewegbar, insbesondere verschwenkbar ist. Insbesondere kann der Ventilschließkörper 8 eine erste und eine zweite Schwenkstellung einnehmen, um abhängig von der Schwenkstellung eine Ventilöffnung freizugeben bzw. zu schließen. Fig. 1 zeigt beispielsweise die erste Schwenkstellung, in der die Anschlüsse 1.2 und 1.3 miteinander fluidisch verbunden sind, und Fig. 2 zeigt die zweite Schwenkstellung des Fluidventils 1, in der die Anschlüsse 1.1 und 1.3 miteinander fluidisch verbunden sind.

Im gezeigten Ausführungsbeispiel weist das Ventilgehäuse 9 drei Anschlüsse 1.1, 1.2, 1.3 auf, wobei abhängig von der Schwenkstellung des Ventilschließkörpers 8 jeweils ein Paar von Anschlüssen miteinander fluidisch verbunden ist. Abweichend davon kann das Fluidventil 1 aber auch lediglich zwei Anschlüsse aufweisen, wobei abhängig von der Schwenkstellung des Ventilschließkörpers 8 eine fluidische Verbindung zwischen den Anschlüssen freigegeben wird oder nicht.

Das Fluidventil 1 weist die folgende Funktionalität auf: die Antriebseinheit 2 ist dazu ausgebildet, die Schwenkstellung eines Ankers 5 zu beeinflussen. Die Antriebseinheit 2 ist beispielsweise eine elektromagnetische Antriebseinheit, d.h. bei Bestromung einer Spule 4 der Antriebseinheit 2 wird eine Magnetkraft erzeugt, mittels der der Anker 5 aus einer zweiten Schwenkstellung (s. Fig. 2) in eine erste Schwenkstellung bewegt wird. Die erste Schwenkstellung ist in Fig. 1 und die zweite Schwenkstellung ist in Fig. 2 gezeigt. Der Anker 5 wird in dieser ersten Schwenkstellung gehalten, solange die Spule 4 mit Strom beaufschlagt ist. Der Anker 5 ist vorzugsweise mittels einer Feder derart federbelastet, dass dieser nach dem Beenden des Stromflusses durch die Spule 4 in die zweite Schwenkstellung zurückbewegt wird.

Wie in Fig. 1 gezeigt, ist der Ventilschließkörper 8 mit dem Anker 5 derart gekoppelt, dass der Ventilschließkörper 8 durch den Anker 5 bewegt, insbesondere verschwenkt wird. Insbesondere nimmt der Ventilschließkörper 8 im Ventilgehäuse 9 abhängig von der Schwenkstellung des Ankers 5 eine erste oder zweite Schwenkstellung ein und definiert damit die Ventilstellung bzw. das Freigeben bzw. Verschließen eines Fluidkanals. Insbesondere umgibt den in das Ventilgehäuse 9 hineinreichenden Abschnitt des Ventilschließkörpers 8 eine Dichtmembran 10. Diese Dichtmembran 10 wird durch den Ventilschließkörpers 8 abhängig von der Schwenkstellung gegen einen Ventilsitz des Ventilgehäuses 9 gedrückt, so dass abhängig von der Schwenkstellung des Ventilschließkörpers 8 ein selektives Öffnen bzw. Schließen eines Fluidkanals erfolgt.

Die Antriebseinheit 2 umfasst einen Grundkörper 6. Der Grundkörper 6 bildet die tragende Grundstruktur der Antriebseinheit 2. Er ist vorzugsweise als Spitzgussteil, insbesondere als Kunststoffspritzgussteil, ausgebildet. Der Grundkörper 6 weist eine rohrförmig oder im Wesentlichen rohrförmig ausgebildete Aufnahme für die Spule 4 auf. Innerhalb der Aufnahme ist eine erste Einschuböffnung ausgebildet, in die ein Schenkel eines U-förmig ausgebildeten Kerns 3 einschiebbar ist.

Der Grundkörper 6 umfasst des Weiteren eine Ankeraufnahme 6.1. Diese Ankeraufnahme 6.1 schließt an die Aufnahme der Spule 1 unmittelbar an und ist dazu ausgebildet, den Anker 5 verschwenkbar zu lagern. Die Ankeraufnahme 6.1 ist schalenartig, insbesondere rechteckschalenartig ausgebildet und weist einen Bodenbereich und mehrere Wandungsbereiche auf. Die Wandungsbereiche sind mit dem Bodenbereich verbunden, umgeben den Bodenbereich umfangsseitig und stehen von dem Bodenbereich ab, und zwar zu einer Seite, die der Spule 4 abgewandt ist.

In dem Bodenbereich ist eine zweite Einschuböffnung vorgesehen, in die ein zweiter Schenkel eines U-förmig ausgebildeten Kerns 3 einschiebbar ist. Der U-förmige Kern 3 ist damit jochartig ausgebildet, wobei ein Schenkel des Kerns 3 durch die Spule 4 umgeben ist, so dass bei Bestromung der Spule 4 ein geschlossener magnetischer Kreis durch den Kern 3 und den die Polflächen 3.1, 3.1' des Kerns 3 überspannenden Anker 5 gebildet wird.

Am Anker 5 ist ein Lagerabschnitt 5.2 vorgesehen. Der Lagerabschnitt 5.2 weist eine Lagerstelle 5.3 auf, mittels der der Anker 5 an einem Grundkörper 6 der Antriebseinheit 2 verschwenkbar gelagert ist. Aufgrund der verschwenkbaren Lagerung des Ankers 5 kann der Anker 5 die vorbeschriebenen Schwenkstellungen einnehmen, und zwar insbesondere eine zweite Schwenkstellung, in der der Anker 5 aus einer parallel zu den Polflächen 3.1, 3.1' verlaufenden Ebene herausgeschwenkt ist (Fig. 2) und eine erste Schwenkstellung, in der eine Längsachse LA des Ankers 5 parallel oder im Wesentlichen parallel zu einer Ebene, in der die Polflächen 3.1, 3.1' des Kerns 3 liegen, verläuft bzw. zu den Polflächen 3.1, 3.1' hin geschwenkt ist (Fig. 1).

Vorzugsweise schließt die Längsachse des Ankers 5 in der ersten Schwenkstellung mit der Längsachse des Ankers 5 in der zweiten Schwenkstellung einen Winkel ein, der kleiner als 5°, insbesondere kleiner als 4°, 3° oder 2° ist. Besonders bevorzugt ist der Winkel kleiner als 1,8°. Aufgrund der geringen Verschwenkbarkeit wird eine hohe Krafteinleitung in den Anker 5 auch dann erreicht, wenn sich dieser in der zweiten Schwenkstellung befindet, d.h. von den Polflächen 3.1, 3.1' des Kerns 3 weggeschwenkt ist, da der Luftspalt zwischen dem Anker 5 und den Polflächen 3.1, 3.1' gering ist.

Der Lagerabschnitt 5.2 ist an einem ersten freien Ende des Ankers 5 vorgesehen. Die an dem Lagerabschnitt 5.2 vorgesehene Lagerstelle 5.3 bildet vorzugsweise eine Gleitlagerstelle, die außenseitig an dem Lagerabschnitt 5.2 gebildet ist. Die Lagerstelle 5.3 wirkt mit einer Gleitlagergegenfläche 6.1.1 zusammen, die am Grundkörper 6 vorgesehen ist. Der Lagerabschnitt 5.2 ist dabei derart in die Ankeraufnahme 6.1 des Grundkörpers 6 eingefügt, dass ein Flächenlager zwischen dem Lagerabschnitt 5.2 und der Ankeraufnahme 6.1 entsteht, d.h. die Lagerstelle 5.3 liegt an der Gleitlagergegenfläche 6.1.1 an, wodurch die verschwenkbare Lagerung des Ankers 5 erreicht wird.

Die Lagerstelle 5.3 des Lagerabschnitts 5.2 ist außenumfangsseitig im Querschnitt kreisbogenförmig ausgebildet, d.h. bildet eine gewölbte Gleitfläche. Die Lagerstelle 5.3 liegt formschlüssig an der konkaven, invers zur Lagerstelle 5.3 geformten Gleitlagergegenfläche 6.1.1 der Ankeraufnahme 6.1 an. Dadurch kann der Anker 5 um eine Schwenkachse SA verschwenkt werden, die parallel zu einer Ebene verläuft, in der die Polflächen 3.1, 3.1' des Kerns 3 angeordnet sind, bzw. die (Schwenkachse SA) senkrecht zur Längsachse LA des Ankers 5 verläuft. Damit kann der Anker 5 zu der oberen Polfläche 3.1 hin bzw. von dieser weg geschwenkt werden.

An der dem Lagerabschnitt 5.2 gegenüberliegenden Seite des Ankers 5 ist eine Anlenkstelle 5.4 vorgesehen. Über diese Anlenkstelle 5.4 wird der Anker 5 mit dem Ventilschließkörper 8 gekoppelt. Die Anlenkstelle 5.4 weist beispielsweise eine Ausnehmung auf, in der ein Abschnitt, insbesondere ein freiendseitiger Abschnitt des Ventilschließkörpers 8 eingreift. Auch eine inverse Ausbildung ist grundsätzlich denkbar, d.h. dass der Ventilschließkörper 8 eine Ausnehmung aufweist, in die ein Vorsprung der Anlenkstelle 5.4 eingreift. Die Kopplung zwischen dem Anker 5 und dem Ventilschließkörper 8 über die Anlenkstelle 5.4 ist insbesondere derart ausgebildet, dass die Anlenkstelle 5.4 eine Verschwenkbarkeit des Ventilschließkörpers 8 relativ zum Anker 5 ermöglicht. Im gezeigten Ausführungsbeispiel wird dies über eine drehgelenkartige Kopplung zwischen dem Anker 5 und dem Ventilschließkörper 8 erreicht.

Die Anlenkstelle 5.4 ist beispielsweise an einem hakenförmig ausgebildeten Vorsprung des Ankers 5 vorgesehen, der von einer Rückseite 5b des Ankers 5 absteht. Die Rückseite 5b liegt der Vorderseite 5a des Ankers 5 gegenüber, die den Polflächen 3.1, 3.1' des Kerns 3 zugewandt ist. Dadurch kann eine raumsparende Kopplung des Ankers 5 mit dem Ventilschließkörper 8 erreicht werden.

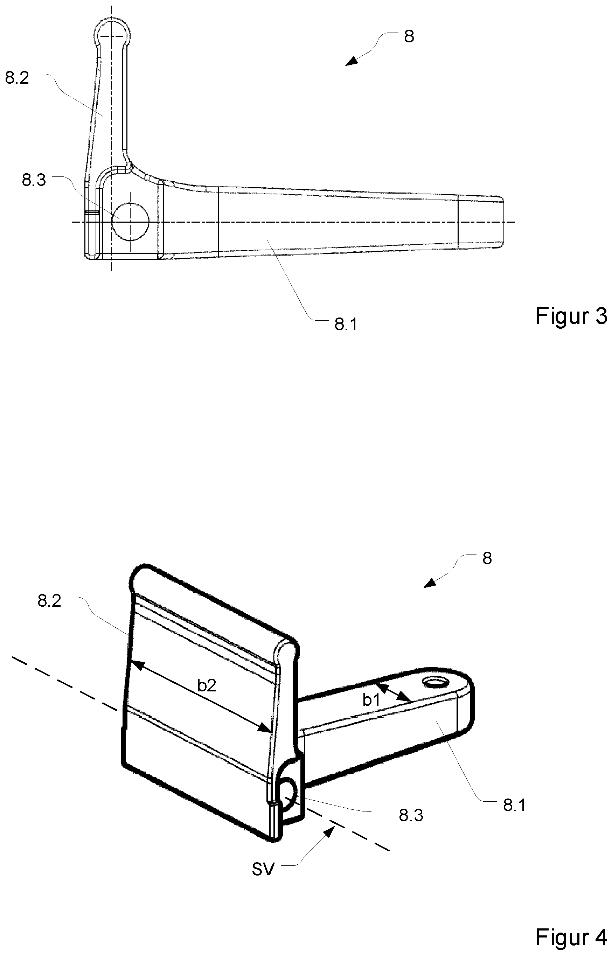

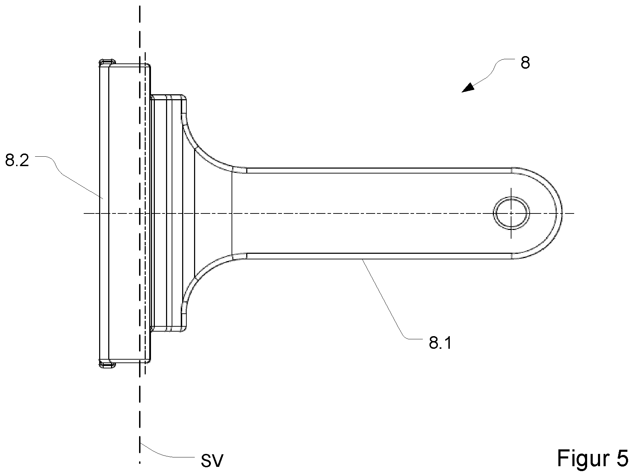

Nachfolgend wird der Ventilschließkörper 8 näher beschrieben. Der Ventilschließkörper 8 ist dabei in den Figuren 3 bis 5 jeweils in Alleinstellung und in unterschiedlichen Ansichten gezeigt.

Wie insbesondere in den Figuren 3 und 4 erkennbar, ist der Ventilschließkörper 8 vorzugsweise winklig ausgebildet und weist einen ersten und zweiten Schenkel 8.1, 8.2 auf. Die Längsachsen der Schenkel 8.1, 8.2 schließen beispielsweise einen Winkel zwischen 80° und 100° miteinander ein. Insbesondere beträgt der Winkel zwischen den Längsachsen der Schenkel 8.1, 8.2 90° oder im Wesentlichen 90°. Der erste Schenkel 8.1 ist dazu ausgebildet, in das Ventilgehäuse 9 hineinzureichen. Der zweite Schenkel 8.2 steht von dem ersten Schenkel 8.1 seitlich ab und verläuft im Wesentlichen parallel zu der Längsachse LA des Ankers 5. Das freie Ende des zweiten Schenkels 8.2 ist über die Anlenkstelle 5.4 mit dem Anker 5 gekoppelt, um die mechanische Verbindung zwischen dem Anker 5 und dem Ventilschließkörper 8 herzustellen. Vorzugsweise ist der Ventilschließkörper 8 mittels des zweiten Schenkels 8.2 direkt, d.h. ohne weitere Zwischenelemente, mit dem Anker 5 gekoppelt.

Im Übergangsbereich zwischen dem ersten und dem zweiten Schenkel 8.1, 8.2 weist der Ventilschließkörper 8 beispielsweise eine Bohrung 8.3 auf, in die ein Bolzen einführbar ist und mittels der der Ventilschließkörper 8 verschwenkbar in der Antriebseinheit 2 gehalten wird. Die Bohrung 8.3 definiert damit die Schwenkachse SV des Ventilschließkörpers 8.

Wie insbesondere in Fig. 3 erkennbar ist, ist der erste Schenkel 8.1 des Ventilschließkörpers 8 länger ausgebildet als der zweite Schenkel 8.2. Dadurch wird erreicht, dass der Schwenkweg des ersten Schenkels 8.1 länger ist als der Schwenkweg des zweiten Schenkels 8.2, so dass auch bei einem geringen Hub des Ankers 5 zwischen dessen erster und zweiten Schwenkstellung das freie Ende des ersten Schenkels 8.1 einen vergrößerten Hub vollzieht. Damit erfolgt eine hinreichend große Beabstandung des freien Endes des ersten Schenkels 8.1 von einem im Ventilgehäuse ausgebildeten Ventilsitz.

Der erste Schenkel 8.1 ist vorzugsweise zumindest 1,5 mal länger, insbesondere mindestens 1,7 mal länger ausgebildet als der zweite Schenkel 8.2. Besonders bevorzugt beträgt das Verhältnis 1,8 oder im Wesentlichen 1,8.

Wie insbesondere in Fig. 4 erkennbar, weisen die Schenkel 8.1, 8.2 eine unterschiedliche Breite auf. Insbesondere ist die Breite b2 des zweiten Schenkels 8.2 größer als die Breite b1 des ersten Schenkels 8.1. Insbesondere kann der Ventilschließkörper 8 auch im Bereich der Bohrung 8.3 breiter ausgebildet sein als der erste Schenkel 8.1. Durch die vergrößerte Breite des zweiten Schenkels 8.2 im Vergleich zum ersten Schenkel 8.1 wird eine verbesserte Kopplung des Ventilschließkörpers 8 mit dem Anker 5 erreicht. Die vergrößerte Breite des Ventilschließkörpers 8 im Bereich der Bohrung 8.3 bewirkt eine verbesserte Lagerung des Ventilschließkörpers 8 in der Antriebseinheit 2.

Vorzugsweise ist der Anker 5 anschlagsfrei in der Ankeraufnahme 6.1 gehalten, d.h. die Schwenkbewegung des Ankers 5 wird weder in der ersten noch in der zweiten Schwenkstellung durch ein Anliegen eines Ankerabschnitts an Komponenten, die den Anker 5 umgeben, begrenzt. Vielmehr erfolgt die Begrenzung der Schwenkbewegung des Ankers 5 durch den Ventilschließkörper 8, der abhängig von der Schwenkstellung des Ankers 5 an Anlageflächen im Ventilgehäuse 9 zur Anlage gelangt. Die Anlageflächen können insbesondere im Ventilgehäuse 9 ausgebildete Ventilsitze sein. Es sei angemerkt, dass auch in der zweiten Schwenkstellung des Ankers 5, die bei Stromfluss durch die Spule 4 eingenommen wird, der Anker 5 zu den Polflächen 3.1, 3.1 ` beabstandet ist/sind. Der Abstand beträgt vorzugsweise weniger als 1mm, insbesondere weniger als 0,5mm, um eine möglichst hohe Krafteinleitung in den Anker 5 zu erreichen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fluidventil
- 1.1: Anschluss
- 1.2: Anschluss
- 1.3: Anschluss
- 2: Antriebseinheit
- 3: Kern
- 3.1, 3.1': Polfläche
- 4: Spule
- 5: Anker
- 5a: Vorderseite des Ankers
- 5b: Rückseite des Ankers
- 5.2: Lagerabschnitt
- 5.3: Lagerstelle
- 5.4: Anlenkstelle
- 6: Grundkörper
- 6.1: Ankeraufnahme
- 6.1.1: Gleitlagergegenfläche
- 8: Ventilschließkörper
- 8.1: erster Schenkel
- 8.2: zweiter Schenkel
- 8.3: Bohrung
- 9: Ventilgehäuse
- 10: Dichtmembran

- LA: Längsachse des Ankers
- SA: Schwenkachse des Ankers
- SV: Schwenkachse des Ventilschließkörpers
- b1: Breite des ersten Schenkels
- b2: Breite des zweiten Schenkels

## Patentansprüche

1. Fluidventil umfassend eine magnetische Antriebseinheit (2) für einen Ventilschließkörper (8), wobei die Antriebseinheit (2) einen Kern (3), eine abschnittsweise den Kern (3) umgebende Spule (4) und einen durch die Bestromung der Spule (4) und die daraus resultierende Magnetkraft um eine Schwenkachse (SA) verschwenkbaren Anker (5) aufweist, wobei der Ventilschließkörper (8) mit dem Anker (5) in Wirkverbindung steht und durch die Verschwenkung des Ankers (5) um eine Schwenkachse (SV) verschwenkbar und zumindest in eine erste und eine zweite Schwenkstellung positionierbar ist und wobei der Ventilschließkörper (8) einen ersten und einen zweiten Schenkel (8.1, 8.2) aufweist, wobei der erste Schenkel (8.1) in ein zumindest einen Fluidkanal aufweisendes Ventilgehäuse (9) hineinreicht und der zweite Schenkel (8.2) winklig vom ersten Schenkel (8.1) absteht und die Wirkverbindung mit dem Anker (5) herstellt, **dadurch gekennzeichnet, dass** der erste Schenkel (8.1) länger ausgebildet ist als der zweite Schenkel (8.2) und dass sich der zweite Schenkel (8.2) über eine Teillänge des Ankers (5) entlang dessen Längsachse (LA) erstreckt.

2. Fluidventil nach Anspruch 1, **dadurch gekennzeichnet, dass** erste Schenkel (8.1) zumindest um den Faktor 1,5 länger ausgebildet ist als der zweite Schenkel (8.2).

3. Fluidventil nach einem der vorhergehenden Ansprüche, **dadurch gekennzeichnet, dass** sich der zweite Schenkel (8.2) von der Schwenkachse (SV) des Ventilschließkörpers (8) aus in Richtung der Seite des Ankers (5) erstreckt, die der Schwenkachse (SA) des Ankers (5) abgewandt ist.

4. Fluidventil nach einem der vorhergehenden Ansprüche, **dadurch gekennzeichnet, dass** der erste Schenkel (8.1) rechtwinklig oder im Wesentlichen rechtwinklig vom zweiten Schenkel (8.2) absteht.

5. Fluidventil nach einem der vorhergehenden Ansprüche, **dadurch gekennzeichnet, dass** die Schwenkachse (SV) des Ventilschließkörpers (8) im Übergangsbereich zwischen dem ersten und zweiten Schenkel (8.1, 8.2) angeordnet ist.

6. Fluidventil nach einem der vorhergehenden Ansprüche, **dadurch gekennzeichnet, dass** der Anker (5) durch die Antriebseinheit (2) zwischen einer ersten und einer zweiten Schwenkstellung bewegbar ist, wobei der Winkel zwischen der ersten und zweiten Schwenkstellung 5° oder kleiner ist.

7. Fluidventil nach einem der vorhergehenden Ansprüche, **dadurch gekennzeichnet, dass** der Kern (3) U-förmig ausgebildet ist und ein Paar von Polflächen (3.1, 3.1 `) aufweist und dass der Anker (5) derart ausgebildet ist, dass dieser das Paar von Polflächen (3.1, 3.1') überspannt.

8. Fluidventil nach einem der vorhergehenden Ansprüche, **dadurch gekennzeichnet, dass** die Schwenkachse (SA) des Ankers (5) parallel zu einer Ebene verläuft, in der die Polflächen (3.1, 3.1') des Kerns (3) angeordnet sind.

9. Fluidventil nach einem der vorhergehenden Ansprüche, **dadurch gekennzeichnet, dass** der Anker (5) relativ zu einer Ebene, in der die Polflächen (3.1, 3.1') des Kerns (3) angeordnet sind, verschwenkbar ist, und zwar derart, dass der Anker (5) im bestromten Zustand in eine erste Schwenkstellung zu den Polflächen (3.1, 3.1') hin geschwenkt und im stromlosen Zustand in eine zweite Schwenkstellung positioniert wird, in der die Längsachse (LA) des Ankers (5) von der Ebene der Polflächen (3.1, 3.1') schräg absteht.

10. Fluidventil nach einem der vorhergehenden Ansprüche, **dadurch gekennzeichnet, dass** die Schwenkachse (SA) des Ankers (5) an einem ersten freien Ende des Ankers (5) vorgesehen ist und dass das freie Ende des zweiten Schenkels (8.2) des Ventilschließkörpers (8) mit einem zweiten freien Ende des Ankers (5) verbunden ist, das der Schwenkachse (SA) des Ankers (5) gegenüberliegt.

11. Fluidventil nach einem der vorhergehenden Ansprüche, **dadurch gekennzeichnet, dass** der Anker (5) im Bereich des zweiten freien Endes eine Anlenkstelle (5.4) für den Ventilschließkörper (8) aufweist und dass die Anlenkstelle (5.4) an einem Vorsprung des Ankers (5) vorgesehen ist, der an einer dem Kern (3) abgewandten Rückseite (5b) des Ankers (5) absteht.

12. Fluidventil nach Anspruch 11, **dadurch gekennzeichnet, dass** die Anlenkstelle (5.4) eine Aufnahme für ein freies Ende des Ventilschließkörpers (8) bildet, wobei das freie Ende des Ventilschließkörpers (8) verschwenkbar in der Anlenkstelle (5.4) gehalten ist.

13. Fluidventil nach einem der vorhergehenden Ansprüche, **dadurch gekennzeichnet, dass** die Verschwenkbarkeit des Ankers (5) sowohl im bestromten als auch im unbestromten Zustand der magnetischen Antriebseinheit (2) durch den Schwenkbereich des Ventilschließkörpers (8) in dem Ventilgehäuse (9) begrenzt ist.

## Claims

1. A fluid valve comprising a magnetic drive unit (2) for a valve closing body (8), wherein the drive unit (2) includes a core (3), a coil (4) which partially surrounds the core (3), and an armature (5) which can be pivoted about a pivot axis (SA) by the energization of the coil (4) and the resulting magnetic force, wherein the valve closing body (8) is in operative connection with the armature (5) and is pivotable about a pivot axis (SV) by the pivoting of the armature (5) and can be positioned at least in a first and a second pivot position, and wherein the valve closing body (8) has a first and a second leg (8.1, 8.2), wherein the first leg (8.1) extends into a valve housing (9) having at least one fluid channel and the second leg (8.2) projects at an angle from the first leg (8.1) and establishes the operative connection with the armature (5), **characterized in that** the first leg (8.1) is longer than the second leg (8.2) and **in that** the second leg (8.2) extends over a partial length of the armature (5) along the longitudinal axis (LA) thereof.

2. The fluid valve according to claim 1, **characterized in that** the first leg (8.1) is longer than the second leg (8.2) by at least a factor of 1.5.

3. The fluid valve according to any one of the preceding claims, **characterized in that** the second leg (8.2) extends from the pivot axis (SV) of the valve closing body (8) in the direction of the side of the armature (5) that faces away from the pivot axis (SA) of the armature (5).

4. The fluid valve according to any one of the preceding claims, **characterized in that** the first leg (8.1) extends perpendicular or substantially perpendicular to the second leg (8.2).

5. The fluid valve according to any one of the preceding claims, **characterized in that** the pivot axis (SV) of the valve closing body (8) is arranged in the transition area between the first and second leg (8.1,8.2).

6. The fluid valve according to any one of the preceding claims, **characterized in that** the armature (5) is movable by the drive unit (2) between a first and a second pivot position, the angle between the first and second pivot position being 5° or smaller.

7. The fluid valve according to any one of the preceding claims, **characterized in that** the core (3) is U-shaped and has a pair of pole faces (3.1, 3.1') and **in that** the armature (5) is designed such that it spans the pair of pole faces (3.1, 3.1').

8. The fluid valve according to any one of the preceding claims, **characterized in that** the pivot axis (SA) of the armature (5) runs parallel to a plane in which the pole faces (3.1, 3.1') of the core (3) are arranged.

9. The fluid valve according to any one of the preceding claims, **characterized in that** the armature (5) can be pivoted relative to a plane in which the pole faces (3.1, 3.1') of the core (3) are arranged, namely in such a way that, in the energized state, the armature (5) is pivoted into a first pivot position towards the pole faces (3.1, 3.1') and, in the de-energized state, it is positioned in a second pivot position in which the longitudinal axis (LA) of the armature (5) projects obliquely from the plane of the pole faces (3.1, 3.1').

10. The fluid valve according to any one of the preceding claims, **characterized in that** the pivot axis (SA) of the armature (5) is provided at a first free end of the armature (5) and **in that** the free end of the second leg (8.2) of the valve closing body (8) is connected to a second free end of the armature (5) that is opposite to the pivot axis (SA) of the armature (5).

11. The fluid valve according to any one of the preceding claims, **characterized in that** the armature (5) has, in the region of the second free end, a linking portion (5.4) for the valve closing body (8), and **in that** the linking portion (5.4) is provided on a projection of the armature (5), which projects at a rear side (5b) of the armature (5) that faces away from the core (3).

12. The fluid valve according to claim 11, **characterized in that** the linking portion (5.4) forms a support for a free end of the valve closing body (8), the free end of the valve closing body (8) being pivotably held in the linking portion (5.4).

13. The fluid valve according to any one of the preceding claims, **characterized in that** the pivotability of the armature (5) is limited in both the energized and de-energized state of the magnetic drive unit (2) by the pivot range of the valve closing body (8) in the valve housing (9).

## Revendications

1. Vanne à fluide comprenant une unité d'entraînement magnétique (2) pour un corps de fermeture de vanne (8), l'unité d'entraînement (2) présentant un noyau (3), une bobine (4) entourant localement le noyau (3), et un induit (5) pouvant être pivoté autour d'un axe de pivotement (SA) par l'alimentation électrique de la bobine (4) et par la force magnétique qui en résulte, le corps de fermeture de vanne (8) étant en liaison active avec l'induit (5) et pouvant pivoter autour d'un axe de pivotement (SV) par le pivotement de l'induit (5) et pouvant être positionné au moins dans une première et dans une deuxième position de pivotement, et le corps de fermeture de vanne (8) comprenant une première et une deuxième branche (8.1, 8.2), la première branche (8.1) pénétrant dans un boîtier de vanne (9) présentant au moins un canal de fluide, et la deuxième branche (8.2) dépassant angulairement de la première branche (8.1) et établissant la liaison active avec l'induit (5), **caractérisée en ce que** la première branche (8.1) est réalisée plus longue que la deuxième branche (8.2), et
**en ce que** la deuxième branche (8.2) s'étend sur une longueur partielle de l'induit (5) le long de son axe longitudinal (LA).

2. Vanne à fluide selon la revendication 1,
**caractérisée en ce que** la première branche (8.1) est réalisée plus longue que la deuxième branche (8.2) d'un facteur d'au moins 1,5.

3. Vanne à fluide selon l'une des revendications précédentes,
**caractérisée en ce que** la deuxième branche (8.2) s'étend depuis l'axe de pivotement (SV) du corps de fermeture de vanne (8) en direction du côté de l'induit (5) détourné de l'axe de pivotement (SA) de l'induit (5).

4. Vanne à fluide selon l'une des revendications précédentes,
**caractérisée en ce que** la première branche (8.1) dépasse de la deuxième branche (8.2) à angle droit ou sensiblement à angle droit.

5. Vanne à fluide selon l'une des revendications précédentes,
**caractérisée en ce que** l'axe de pivotement (SV) du corps de fermeture de vanne (8) est disposé dans la zone de transition entre la première et la deuxième branche (8.1, 8.2).

6. Vanne à fluide selon l'une des revendications précédentes,
**caractérisée en ce que** l'induit (5) peut être déplacé par l'unité d'entraînement (2) entre une première et une deuxième position de pivotement, l'angle entre la première et la deuxième position de pivotement étant de 5° ou moins.

7. Vanne à fluide selon l'une des revendications précédentes,
**caractérisée en ce que** le noyau (3) est réalisée en forme de U et présente une paire de surfaces polaires (3.1, 3.1'), et
**en ce que** l'induit (5) est conçu de manière à enjamber la paire de surfaces polaires (3.1, 3.1').

8. Vanne à fluide selon l'une des revendications précédentes,
**caractérisée en ce que** l'axe de pivotement (SA) de l'induit (5) est parallèle à un plan dans lequel sont disposées les surfaces polaires (3.1, 3.1') du noyau (3).

9. Vanne à fluide selon l'une des revendications précédentes,
**caractérisée en ce que** l'induit (5) peut pivoter par rapport à un plan dans lequel sont disposées les surfaces polaires (3.1, 3.1') du noyau (3), et ce de telle sorte que l'induit (5), à l'état alimenté, est pivoté dans une première position de pivotement vers les surfaces polaires (3. 1, 3.1') et, à l'état non alimenté, est positionné dans une deuxième position de pivotement dans laquelle l'axe longitudinal (LA) de l'induit (5) dépasse en oblique du plan des surfaces polaires (3.1, 3.1 ').

10. Vanne à fluide selon l'une des revendications précédentes, **caractérisée en ce que** l'axe de pivotement (SA) de l'induit (5) est prévu à une première extrémité libre de l'induit (5), et
**en ce que** l'extrémité libre de la deuxième branche (8.2) du corps de fermeture de vanne (8) est reliée à une deuxième extrémité libre de l'induit (5) opposée à l'axe de pivotement (SA) de l'induit (5).

11. Vanne à fluide selon l'une des revendications précédentes, **caractérisée en ce que** l'induit (5) présente, au niveau de la deuxième extrémité libre, un emplacement d'articulation (5.4) pour le corps de fermeture de vanne (8), et
**en ce que** l'emplacement d'articulation (5.4) est prévu sur une saillie de l'induit (5) qui dépasse d'un côté arrière (5b) de l'induit (5) détourné du noyau (3).

12. Vanne à fluide selon la revendication 11,
**caractérisée en ce que** l'emplacement d'articulation (5.4) forme un logement pour une extrémité libre du corps de fermeture de vanne (8), l'extrémité libre du corps de fermeture de vanne (8) étant maintenue avec faculté de pivotement dans l'emplacement d'articulation (5.4).

13. Vanne à fluide selon l'une des revendications précédentes, **caractérisée en ce que** la capacité de pivotement de l'induit (5) est limitée par la zone de pivotement du corps de fermeture de vanne (8) dans le boîtier de vanne (9), aussi bien à l'état alimenté qu'à l'état non alimenté de l'unité d'entraînement magnétique (2).
